Europäisches Patentamt

**European Patent Office**

Office européen des brevets

(11) Numéro de publication: **0 354 120 B1**

## FASCICULE DE BREVET EUROPEEN

(45) Date de publication de fascicule du brevet: **22.09.93** (51) Int. Cl.5: **H04Q 11/04**

(21) Numéro de dépôt: **89402190.6**

(22) Date de dépôt: **02.08.89**

(54) **Procédé et dispositif de transmission en mode asynchrone mettant en oeuvre des microcellules.**

(30) Priorité: **05.08.88 FR 8810613**

(43) Date de publication de la demande:
**07.02.90 Bulletin 90/06**

(45) Mention de la délivrance du brevet:
**22.09.93 Bulletin 93/38**

(84) Etats contractants désignés:
**BE GB IT**

(56) Documents cités:

**IEEE JOURNAL ON SELECTED AREAS IN COMMUNICATIONS, vol. SAC-5, no. 8, octobre 1987, pages 1222-1230, IEEE, New York, NY, US; D.R. SPEARS: "Broadband ISDN switching capabilities from a services perspective"**

**PROCEEDINGS IEEE INTERNATIONAL CONFERENCE ON COMMUNICATIONS, Seattle, 7-10 juin 1987, vol. 1, IEEE, Seattle, Washington, US; S.E. MINZER: "Broadband user-network interfaces to ISDN"**

**PROCEEDINGS IEEE INTERNATIONAL SWITCHING SYMPOSIUM, Phoenix, 15-20 mars 1987, pages 462-469, IEEE, Phoenix, US;**

**M.WM. BECKNER et al.: "A protocol and prototype for broadband subscriber access to ISDNs"**

**PROCEEDINGS INTERNATIONAL SWITCHING SYMPOSIUM, Paris, 7-11 mai 1979, pages 757-764, Paris, FR; Y. IKEDA et al.: "Virtual circuit switching system: a new system concept for telephony and data integration"**

**PROCEEDINGS INTERNATIONAL CONFERENCE ON COMMUNICATIONS, Seattle, 7-16 juin 1987, pages 1585-1592, IEEE, Seattle, Washington, US; L.T. WU et al.: "Dynamic TDM - a packet approach to broadband networking"**

(73) Titulaire: **LMT RADIO PROFESSIONNELLE
46-47, Ouai Alphonse Le Gallo
F-92103 Boulogne-Billancourt(FR)**

(72) Inventeur: **Lagoutte, Pierre
THOMSON-CSF SCPI Cédex 67
F-92045 Paris la Défense(FR)**

(74) Mandataire: **Lincot, Georges et al
THOMSON-CSF, SCPI, B.P. 329, 50, rue Jean-Pierre Timbaud
F-92402 Courbevoie Cédex (FR)**

EP 0 354 120 B1

## Description

L'invention se rapporte au domaine des télécommunications, et particulièrement aux réseaux numériques à intégration de services à large bande, "Broadband ISDN" dans la terminologie anglo-saxonne, c'est-à-dire aux réseaux multiservices à large plage de débits, pouvant aller de la transmission de télévision numérique haute définition, à 150 mégabits par seconde, à la transmission de messages parlés courts, par exemple pour des applications civiles ou militaires où la parole est codée par codage à prédiction linéaire, par exemple LPC10, par des vocodeurs à 2400 bits/s.

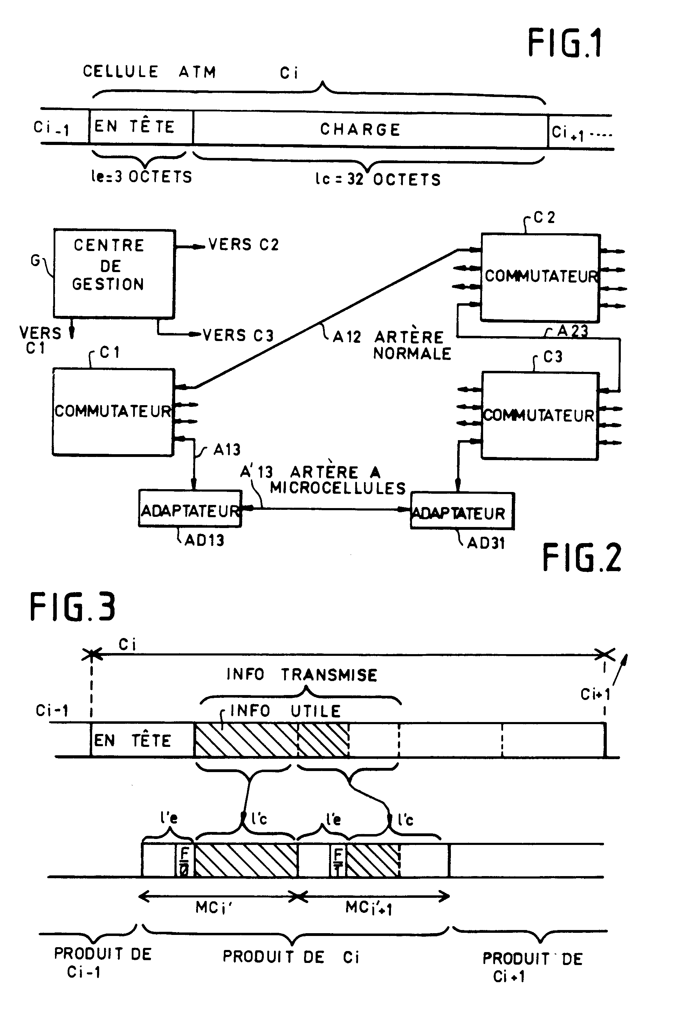

Pour les réseaux numériques à intégration de services à large bande, une conférence internationale a retenu le mode asynchrone pour le transfert des données, c'est-à-dire un transfert dans des cellules de longueurs fixes qui comportent un en-tête et une charge utile, l'en-tête ayant une longueur comprise entre 3 et 5 octets tandis que la charge utile aura une longueur comprise entre 32 et 120 octets. Une fois les caractéristiques du réseau définies, ces longueurs seront fixées. La décision finale relative aux longueurs respectives de l'en-tête et de la charge utile devra réaliser le meilleur compromis pour que la qualité de la transmission soit acceptable, les retards et pertes d'informations étant minimisés. Pour optimiser l'efficacité de transmission, le rapport entre la taille de l'en-tête et la taille de la charge utile devra permettre de transmettre tous les services envisagés correctement. Mais quelles que soit les valeurs définitives retenues, il est clair que l'efficacité de transmission sera minimum pour les liaisons à bas débit compte tenu du fait que les cellules ne seront pas complètement remplies pour ce type de transmission. Si $l_e$ est la longueur de l'en-tête, et si $l_c$ est la longueur de la charge, u étant la longueur de l'information fonction de transmission se mesure par $e = u/(l_c + l_e)$. Pour des données bas débit du type parole codée en 2400 bits/s, u = 4 octets, c'est-à-dire que la paquettisation correspondra à une durée de parole de 14 millisecondes. Si l'on utilise une cellule classique telle que celle représentée sur la figure 1 dans laquelle la longueur de l'en-tête $l_e$ est égale à 3 octets, et dans laquelle $l_c$ est égale à 32 octets (longueur minimale prévue dans la recommandation internationale), l'efficacité de transmission pour ce type de données est de 12%.

En conséquence un réseau dans lequel le transfert des données est effectué en mode asynchrone permet effectivement de transmettre ces différents types d'informations dans des cellules de longueur fixe, l'information étant répartie dans une suite de cellules lorsqu'il y a lieu à haut débit, les cellules n'étant remplies que partiellement lorsqu'il y a lieu à bas débit. Mais pour les liaisons à bas débit une cellule n'est transmise puis aiguillée à travers les différentes jonctions du réseau que lorsqu'elle est entièrement reçue ; ce qui entraîne une efficacité de transmission inférieure à celle obtenue lorsque la cellule est entièrement remplie, du fait du temps d'"emballage". En d'autres termes la transmission des données à bas débit est effectuée avec un certain retard.

Pour certains types de services un tel transfert n'a pas d'inconvénient. Par contre ce transfert en mode asynchrone peut être gênant pour des liaisons bas débit pour lesquelles on souhaite une transmission en temps réel, par exemple pour des liaisons tactiques ou les liaisons utiles en aéronautique.

Des solutions de transfert hybrides pour partie synchrones et pour partie asynchrones ont donc été suggérés par exemple dans le compte-rendu de conférence intitulé "Broadband user-network interfaces to ISDN" Proceedings IEEE International Conference on Communications, Seattle 7-10 juin 1987, vol. 1 , IEEE.

L'invention a pour objet un procédé, et le dispositif correspondant, de transmission en mode complètement asynchrone permettant de réduire l'inconvénient du retard de transmission en mode asynchrone pour les transmissions à bas débit en mettant en oeuvre des microcellules :

Le procédé de transmission, compatible avec le format prévu pour les cellules de transmission en mode asynchrone, est tel que les informations bas débit et temps réel sont "emballées" dans des cellules plus petites, dites dans la suite microcellules, sur les artères où la proportion de ce type de communications est importante.

Selon l'invention, un procédé de transmission, en mode asynchrone pour un réseau multiservices à grande plage de débits respectivement associés aux différents services, de données numériques transportées dans des cellules de longueur prédéfinie formées chacune d'une en-tête et d'une charge, est caractérisé en ce que, pour acheminer avec une efficacité de transmission convenable les communications à bas débit et temps réel, le procédé consiste à effectuer, à une extrémité d'une artère, après commutation, une transformation des cellules de transmission en microcellules de longueur inférieure ayant une longueur de charge résultant d'une division entière de la longueur de charge des cellules et une en-tête de longueur proportionnée, l'en-tête comportant un indicateur qui change d'état pour les microcellules transportant les dernières données utiles de la charge d'une cellule, et à l'autre extrémité de l'artère, avant commutation, une transformation inverse pour restituer les cellules normalisées au commutateur.

L'invention sera mieux comprise et d'autres caractéristiques apparaîtront à l'aide de la description qui suit en référence aux figures annexées.

- La figure 1 représente le format d'une cellule de transfert d'information en mode asynchrone;
- La figure 2 est un schéma du dispositif de transmission selon l'invention;
- La figure 3 illustre le procédé de transmission mettant en oeuvre des microcellules, selon l'invention.

La figure 1 montre la cellule de transfert de données $C_i$ et les longueurs $l_e$, $l_c$, et u décrites ci-dessus, pour un transfert en mode asynchrone, ATM pour "Asynchronous transfert mode".

La figure 2 montre schématiquement comment l'invention est mise en oeuvre dans un réseau de transfert de données.

Un centre de gestion G commande le transfert des données dans le réseau à partir des différentes sources de données (non représentées) en les aiguillant sur les différentes artères $A_{12}$, $A_{13}$, $A_{23}$ ... du réseau reliant des commuteurs, $C_1$, $C_2$, $C_3$. Selon l'invention les artères adaptées au transfert des données en ATM dans des cellules de transfert de données $C_i$ prédéfinies, seront munies à leurs deux extrémités d'adaptateurs lorsque la proportion des communications bas débit/temps réel qu'elles auront à transmettre sera élevée. Sur la figure 2, on a supposé que l'artère $A_{13}$ était une artère de ce type et deux circuits adaptateurs $AD_{13}$ et $AD_{31}$ ont été prévus sur cette artère, le transfert des données entre ces deux adaptateurs sur l'artère $A_{13}$ étant effectué dans des microcellules, c'est-à-dire dans des cellules plus petites que celles définies pour le transfert dans le réseau.

D'une manière générale pour les cellules $C_i$, $l_c$ est égal à $2^n$. Les microcellules MC qui sont constituées par les circuits adaptateurs à partir des cellules $C_i$ auront une longueur de charge $l'_c = l_c/2^k$ où k est inférieur à n avec une en-tête de longueur $l'_e$ proportionnée. Par exemple pour $l_c = 2^5 = 32$ octets, k étant choisi égal à 2, $l'_c = 2^5/2^2 = 2^3 = 8$ octets, ce qui revient à répartir la longueur de charge d'une cellule $C_i$ entre au plus 4 microcellules de longueur de charge 8 octets. La charge utile est alors découpée pour être transmise dans ces microcellules. Lorsque tout le champ information utile a été découpé, la microcellule qui comporte les dernières informations utiles d'une cellule ATM normale $C_i$ est marquée dans son en-tête par un signal particulier F : F = 0 pour toutes les microcellules sauf pour la dernière microcellule, F = 1, parmi les $2^n$, les autres n'étant pas transmises puisque vides.

Ce procédé de constitution de microcellules à partir des cellules normalisées est illustré par la figure 3 où k est choisi égal à 2 : la cellule $C_i$ étant

remplie à moins de 50% mais à plus de 25%, le champ information utile est découpé et inséré dans les charges utiles de deux microcellules $MC_i$, et $MC_{i'+1}$. Ainsi, après cette deuxième microcellule, des microcellules produites à partir de la cellule suivante $C_{i+1}$ pourront être transmises et l'efficacité de la transmission sur l'artère correspondante ainsi équipée est sensiblement augmentée.

Ce procédé nécessite dans l'ensemble du système, et notamment dans les moyens de gestion, l'extraction de données particulières relatives au remplissage des cellules : une communication d'un type donné (fonction du service assuré) ne remplissant ses cellules que jusqu'à un maximum d'octets connu du réseau à l'établissement de l'appel, par exemple u = 20 octets, pourra être acheminée préférentiellement via des artères munies d'adaptateurs produisant, à partir des cellules normales, des microcellules ayant des longueurs de charge $2^{n-k}$ octets, soit de 4 (ou 8) octets par exemple, u étant alors répartie dans 5 (ou 3) microcellules.

Les circuits adaptateurs traitant la découpe puis à l'inverse la reconstitution de cellules normales sur les artères à microcellules sont des adaptateurs de transmission situés en dehors des commutateurs ; ils sont purement matériels (n'incluant pas de logiciel) et peuvent être inclus soit dans les équipements de transmission, par exemple faisceaux hertziens pour les communications à distance, soit dans les cartes jonction des commutateurs. Les commutateurs pilotent les adaptateurs sur leurs artères entrantes ou sortantes en indiquant les caractéristiques du flux à découper dans les en-têtes des cellules à découper, trois bits étant réservés à cet effet dans les en-têtes des cellules ATM normales.

Pour la fonction commutation, les commutateurs ne commutent que des cellules ATM normales.

Ces adaptateurs peuvent n'être disposés que sur certaines artères ou peuvent être disposés sur toutes les artères, n'étant actifs que lorsque les bits correspondant de l'en-tête d'une cellule normale produisent, directement par câblage, la découpe nécessaire.

## Revendications

1. Procédé de transmission, en mode asynchrone pour un réseau multiservices à grande plage de débits respectivement associés aux différents services de données numériques transportées dans des cellules de longueur prédéfinie formées chacune d'une en-tête et d'une charge, caractérisé en ce que, pour acheminer avec une efficacité de transmission convenable les communications à bas débit et temps réel, le procédé consiste à effectuer, à une extrémité d'une artère, après commutation, une transformation des cellules de transmission en microcellules de longueur inférieure ayant une longueur de charge résultant d'une division entière de la longueur de charge des cellules et une en-tête de longueur proportionnée l'entête comportant un indicateur qui change d'état pour les microcellules transportant les dernières données utiles de la charge d'une cellule, et à l'autre extrémité de l'artère, avant commutation, une transformation inverse pour restituer les cellules normalisées au commutateur.

2. Procédé selon la revendication 1 caractérisé en ce que l'en-tête des cellules à transformer en microcellules comporte les caractéristiques du flux de données à transmettre dans ces microcellules

3. Dispositif de transmission en mode asynchrone dans un réseau multiservices destiné à la mise en oeuvre du procédé selon l'une des revendications 1 et 2 caractérisé en ce qu'il comporte sur les artères du réseau destinées à transmettre des communications à bas débit et temps réel en proportion importante des circuits adaptateurs ($AD_{13}$ et $AD_{31}$) aux deux extrémités d'une artère ($A_{13}$) entre deux commutateurs ($C_1$, $C_3$), transformant les cellules de transmission normalisées en microcellules plus courtes après un commutateur, et inversement les microcellules en cellules normalisées avant un commutateur, les microcellules ayant une longueur de charge résultant d'une division entière de la longueur de charge des cellules et une en-tête de longueur proportionnée, et l'en-tête comportant un indicateur qui change d'état pour les microcellules transportant les dernières données utiles de la charge d'une cellule.

4. Dispositif selon la revendication 3 caractérisé en ce que les circuits adaptateurs sont situés dans les équipements de transmission des extrémités des artères de transmission.

5. Dispositif selon la revendication 3, caractérisé en ce que les circuits adaptateurs sont situés dans les cartes de jonction des commutateurs aux artères.

## Claims

1. Method of asynchronous transmission for a multi-service network having a wide range of rates respectively associated with the various services, of digital data transported in cells of predefined length each formed of a header and a load, characterised in that, in order to route the low-rate, real-time communications with a suitable transmission efficiency, the method consists in carrying out, at one end of a route, after switching, a transformation of the transmission cells into microcells of smaller length having a load length resulting from an integer division of the load length of the cells and a header of proportioned length, the header including an indicator which changes state for the microcells transporting the last useful data of the load of a cell, and at the other end of the route, before switching, an inverse transformation in order to restore the normalised cells at the switch.

2. Method according to Claim 1, characterised in that the header of the cells to be transformed into microcells includes the characteristics of the data stream to be transmitted in these microcells.

3. Device for asynchronous transmission in a multi-service network intended for the implementation of the method according to one of Claims 1 and 2, characterised in that it includes, on the network routes intended to transmit low-rate, real-time communications in sizeable proportion, adaptor circuits ($AD_{13}$ and $AD_{31}$) at the two ends of a route ($A_{13}$) between two switches ($C_1$, $C_3$), transforming the normalised transmission cells into shorter microcells after a switch, and, inversely, the microcells into normalised cells before a switch, the microcells having a load length resulting from an integer division of the load length of the cells and a header of proportioned length, and the header including an indicator which changes state for the microcells transporting the last useful data of the load of a cell.

4. Device according to Claim 3, characterised in that the adaptor circuits are situated in the transmission equipment at the ends of the transmission routes.

5. Device according to Claim 3, characterised in that the adaptor circuits are situated in the cards linking the switches to the routes.

## Patentansprüche

1. Verfahren zur Übertragung digitaler Daten im asynchronen Modus in einem dienstintegrierten Netz mit den verschiedenen Diensten zugeordneten, sehr unterschiedlich großen Datendurchsätzen, wobei die Daten in Zellen vorbestimmter Länge übertragen werden, die je ein Präfix und einen Nutzdatenteil enthalten, dadurch gekennzeichnet, daß das Verfahren in Hinblick auf einen brauchbaren Übertragungswirkungsgrad der Nachrichten geringen Datendurchsatzes in Echtzeit darin besteht, an einem Ende einer Nachrichtenstrecke nach der Durchschaltung die Übertragungszellen in Mikrozellen geringerer Länge umzuwandeln, mit einer Nutzdatenlänge, die aus einer ganzzahligen Unterteilung der Länge des Nutzdatenteils der Zellen resultiert, und mit einem Präfix einer proportionierten Länge, das einen Indikator enthält, der seinen Zustand für die Mikrozellen ändert, die die letzten Nutzdaten des Nutzdatenteils transportiert, während am anderen Ende der Nachrichtenstrecke vor der Durchschaltung eine Transformation in umgekehrter Richtung erfolgt, um die Standardzellen dem Durchschalter anzubieten.

2. Verfahren nach Anspruch 1, dadurch gekennzeichnet, daß das Präfix der in Mikrozellen umzuwandelnden Zellen die Kennzeichen für den in diesen Mikrozellen zu übertragenden Datenfluß enthält.

3. Vorrichtung zur Datenübertragung im asynchronen Modus in einem dienstintegrierten Netz zur Durchführung des Verfahrens nach einem der Ansprüche 1 und 2, dadurch gekennzeichnet, daß auf den Nachrichtenstrecken, die in erheblichem Umfang Nachrichten mit geringem Durchsatz und in Echtzeit übertragen sollen, Anpassungskreise ($AD_{13}$ und $AD_{31}$) an den beiden Enden der Nachrichtenstrecke ($A_{13}$) zwischen zwei Durchschaltern ($C_1$ und $C_3$) vorgesehen sind, die die Standardnachrichtenzellen in kürzere Mikrozellen nach einem Durchschalter umwandeln und umgekehrt die Mikrozellen in Standardzellen vor einem Umschalter umwandeln, wobei die Mikrozellen eine Länge des Nutzdatenteils besitzen, die sich durch ganzzahlige Unterteilung der Länge des Nutzdatenteils der Zellen ergibt, und ein Präfix einer proportionierten Länge und wobei das Präfix einen Indikator enthält, der seinen Zustand für die die letzten Nutzdaten einer Zelle transportierenden Mikrozellen ändert.

4. Vorrichtung nach Anspruch 3, dadurch gekennzeichnet, daß die Anpassungskreise in den Übertragungseinrichtungen an den Enden der Nachrichtenstrecke liegen.

5. Vorrichtung nach Anspruch 3, dadurch gekennzeichnet, daß die Anpassungskreise auf den Schnittstellenkarten zwischen den Durchschaltern und den Nachrichtenstrecken liegen.

# FIG.1

CELLULE ATM                    Ci

| Ci-1 | EN TÊTE | CHARGE | Ci+1 .... |

le=3 OCTETS                    lc = 32 OCTETS

CENTRE DE GESTION
G
VERS C2
VERS C1
VERS C3

C2
COMMUTATEUR

A12 ARTÈRE NORMALE
A23

C1
COMMUTATEUR

C3
COMMUTATEUR

A13

A'13 ARTÈRE A MICROCELLULES

ADAPTATEUR
AD13

ADAPTATEUR
AD31

# FIG.2

# FIG.3

Ci

INFO TRANSMISE

INFO UTILE

Ci-1                                                    Ci+1

| EN TÊTE | | | | |

l'e    l'c    l'e    l'c

F0    F1

MCi'            MCi'+1

PRODUIT DE Ci-1        PRODUIT DE Ci        PRODUIT DE Ci+1

6